# FASCICULE DE BREVET EUROPEEN

(11) **EP 1 980 503 B1**
(45) Date de publication et mention de la délivrance du brevet: **11.04.2012**
(21) Numéro de dépôt: 08102771.6
(22) Date de dépôt: 19.03.2008
(51) Int. Cl.: B65G 1/04

(54) **Installation de délivrance d'objets, notamment pour pharmacie**
Ausgabeanlage für Gegenstände, insbesondere für Apotheken
Installation for delivering objects, in particular for pharmacy

(30) Priorité: 13.04.2007 FR 0754469
(43) Date de publication de la demande: 15.10.2008
(73) Titulaire: Pharmacie Automatisme SAS, 83520 Roquebrune sur Argens (FR)
(72) Inventeur: Nizard, Stéphane, 06000, NICE (FR)
(74) Mandataire: Decobert, Jean-Pascal

(56) Documents cités:
- EP-A- 1 391 402
- FR-A- 2 686 327

## Description

La présente invention concerne une installation de délivrance d'objets, selon le préambule de la revendication 1, telle que divulguée dans le document FR-A-2686327.

Elle trouvera son application particulière pour des objets de type boîtes de médicaments.

Dans l'exemple des officines de pharmacie, le stockage d'un grand nombre de références de médicaments est de plus en plus problématique.

Il nécessite un espace important et empiète sur le temps que peuvent consacrer les pharmaciens au conseil de leur clientèle.

On a déjà proposé des installations de stockage tentant de pallier ce problème.

Ainsi, il existe sur le marché des installations de type armoire comportant une pluralité de tiroirs superposés pouvant être ouverts ou fermés et disposant de compartiments de réception des objets en particulier des boîtes de médicaments.

Pour réaliser automatiquement la délivrance des objets, des installations existantes comprennent un système de bras de préhension de tiroirs apte à se positionner en face d'un tiroir et à le tirer ou le pousser pour l'ouvrir ou le fermer.

Les installations actuelles comportent par ailleurs un autre bras permettant la préhension d'un objet sélectionné.

Cette technologie donne globalement satisfaction mais est d'une conception particulièrement complexe de par la présence de deux bras (l'un pour l'opération du tiroir, l'autre pour la préhension de l'objet) disposant d'une cinématique complexe dans la mesure ou leur mobilité doit permettre de se positionner devant le bon tiroir et le bon objet.

La délivrance d'objets est en outre lente, surtout quand plusieurs objets sont à extraire consécutivement, par exemple pour une même commande comprenant des objets du même type tels une pluralité de boîtes d'un même médicament.

La présente invention permet de remédier aux inconvénients des dispositifs connus jusqu'à présent et propose à cet effet une installation de délivrance d'objets améliorée permettant de simplifier le mode de délivrance des objets, comme décrite dans la revendication 1.

Une seule manipulation du tiroir et des moyens de rétention permet de délivrer le nombre souhaité d'objets disposés dans une même ligne.

Selon des modes de réalisation préférés mais non limitatifs de l'invention, l'installation est telle que :
- les moyens de rétention sont mobiles verticalement et dans le plan des tiroirs et à un degré de liberté en translation dans le plan des tiroirs complémentaire à la mobilité des tiroirs,
- les moyens de rétention sont constitués d'une tête d'extraction configurée pour être positionnée au-dessus d'un des objets de la ligne et comporte des moyens d'arrimage audit objet,
- les moyens d'arrimage sont constitués d'une bouche d'aspiration ayant un effet ventouse sur l'objet,
- les moyens de rétention comportent une butée configurée pour s'appliquer sur la face arrière d'un des objets de la ligne relativement au déplacement du tiroir de la position active à la position de repos,
- la butée est formée par l'extrémité distale d'un bras configuré pour se positionner verticalement derrière un des objets de la ligne relativement au déplacement du tiroir de la position activée à la position de repos,
- les tiroirs comportent une pluralité de glissières disposées dans le sens de déplacement des tiroirs et destinées à recevoir les objets disposés en ligne,
- les glissières sont de largeurs différentes ou réglables.

La présente invention concerne également un procédé de délivrance d'objet, comme décrit dans la revendication 9, utilisant une installation de délivrance d'objet décrite ci-dessus comprenant les étapes de :
- déplacement d'un tiroir d'une position de repos à une position active
- positionnement des moyens de rétention au niveau d'un objet
- déplacement dudit tiroir d'une position active à une position de repos pendant lequel le ou les objet(s) retenus par les moyens de rétention sont délivrés à l'extrémité du tiroir.

Les dessins ci-joints sont donnés à titre d'exemples et ne sont pas limitatifs de l'invention. Ils représentent seulement un mode de réalisation de l'invention et permettront de la comprendre aisément.
La figure 1 est une vue de face de l'invention.
La figure 2 est une vue latérale de l'invention selon un mode de réalisation.
Les figures 3 à 11 montrent les phases successives de fonctionnement de l'invention selon un mode de réalisation.
La figure 12 est une vue du dessus d'un exemple de réalisation d'un tiroir.
La figure 13 est une vue en perspective d'un exemple de réalisation d'un tiroir.

De façon connue en soi, l'installation ici proposée peut se présenter sous forme d'une armoire disposant d'une pluralité de tiroirs 2 montés en translation horizontale et organisés sous forme d'une rangée verticale de tiroirs 2.

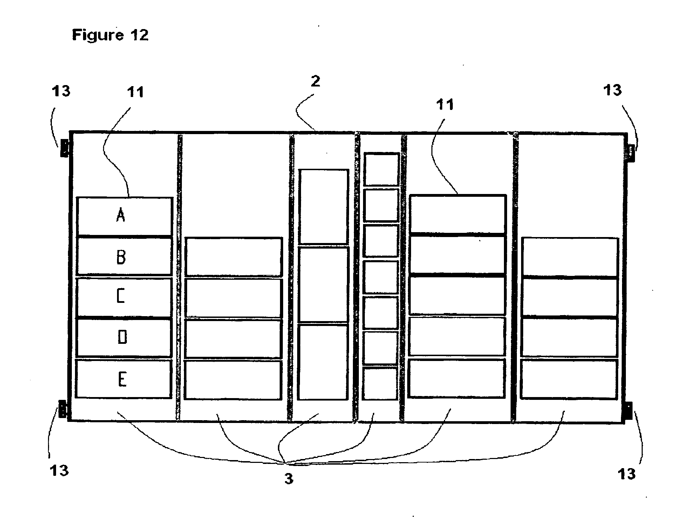

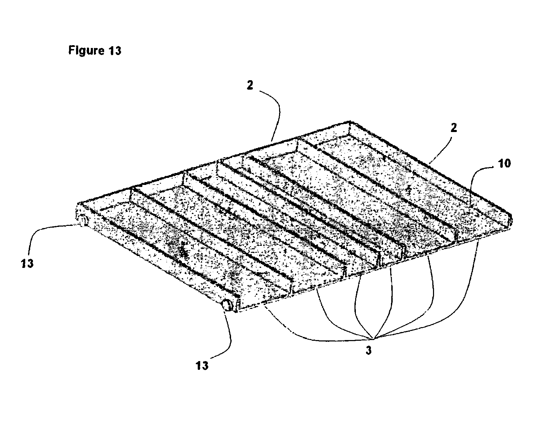

Tels qu'illustrés en figure 12 et 13, les tiroirs 2 comportent avantageusement des glissières 3 pouvant être de dimensions différentes de sorte à s'adapter à différentes physionomies d'objets 11 à recevoir.

La structure périphérique à la rangée de tiroirs 2 peut être de conception courante et par exemple comporter un châssis 1 disposant de profilés formant un bâti.

Lorsque l'utilisateur souhaite extraire un ou plusieurs objets 11 stockés dans un tiroir 2, il convient d'ouvrir ce tiroir en le tirant vers l'avant et de positionner les moyens de rétention 7 pour retenir un ou plusieurs objets 11 de la ligne.

Les moyens pour déplacer les tiroirs 2 comportent une rampe mobile en translation horizontale, pourvue d'une pluralité d'organes de couplage chacun apte à coopérer avec un tiroir 2 et dont l'activation est commandée pour déplacer le tiroir 2 sélectionné.

La rampe mobile comporte autant d'organes de couplage que la rangée comporte de tiroirs.

Les organes de couplage sont avantageusement des électroaimants commandés en activation de façon sélective. Les électroaimants coopèrent avec une partie métallique située en regard de l'électroaimant sur chaque tiroir 2 de la rangée. La plaque métallique est attirée magnétiquement par l'électroaimant correspondant lorsqu'il est activé.

Une fois l'électroaimant du tiroir 2 sélectionné activé, la rampe mobile subit une translation horizontale destinée à faire avancer (vers la position active) ou reculer (vers la position de repos) le tiroir 2 sélectionné par rapport à la rangée de tiroirs 2.

Avantageusement, les tiroirs 2 comportent, comme illustré, des roues 13 sur leurs faces latérales qui sont guidées par des rails de guidage 5. Chaque tiroir 2 coopère avec deux rails de guidage 5. Les rails de guidage 5 peuvent s'étendre sur toute la profondeur de l'installation et ont par exemple une longueur sensiblement égale à deux fois la longueur d'un côté du tiroir 2. Ainsi, lorsque le tiroir 2 est déplacé, il est entièrement guidé et maintenu dans les rails de guidage 5 sur toute sa profondeur même en position active, ce qui contribue à une bonne stabilité du tiroir 2.

L'invention ici décrite assure la délivrance d'un ou plusieurs objets simultanément.

Pour y parvenir, l'installation comporte des moyens de rétention 7 mobiles de sorte à pouvoir retenir un ou des objets 11 lorsque le tiroir 2 passe d'une position active à une position de repos.

Ainsi, les objets retenus par les moyens de rétention 7 ne suivent pas le déplacement du tiroir 2 et sont extraits de celui-ci lorsqu'ils arrivent à l'extrémité avant 10 de la glissière 3 et chutent par gravité sur un tapis de convoyage 12.

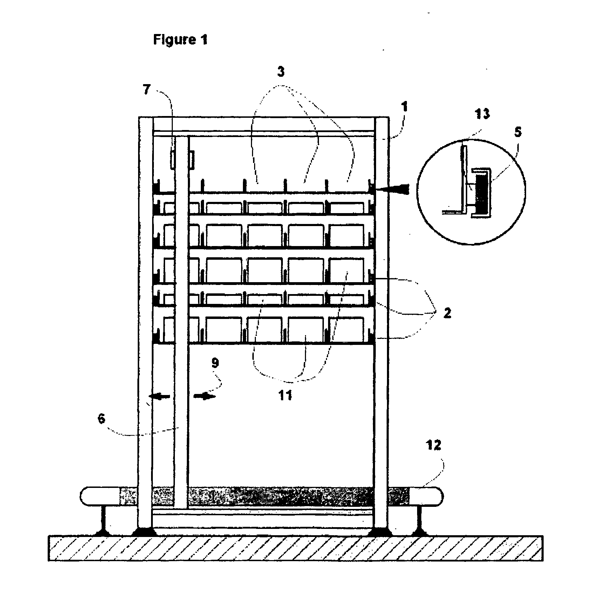

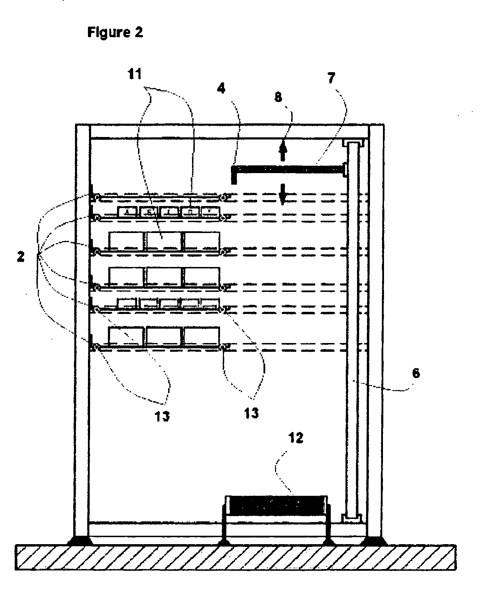

Pour se positionner au regard du ou des objets à retenir, les moyens de rétention 7 comporte une mobilité verticale repérée 8 en figure 2 et une mobilité latérale repérée 9 en figure 1.

Ces deux mobilités sont complémentaires à la mobilité du tiroir 2 et assure un bon positionnement des moyens de rétention 7.

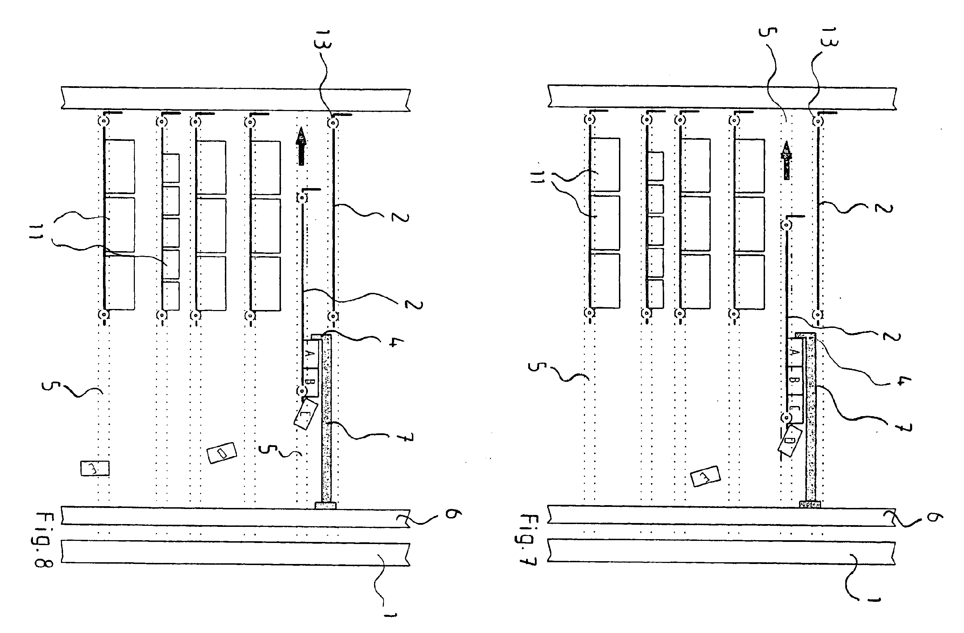

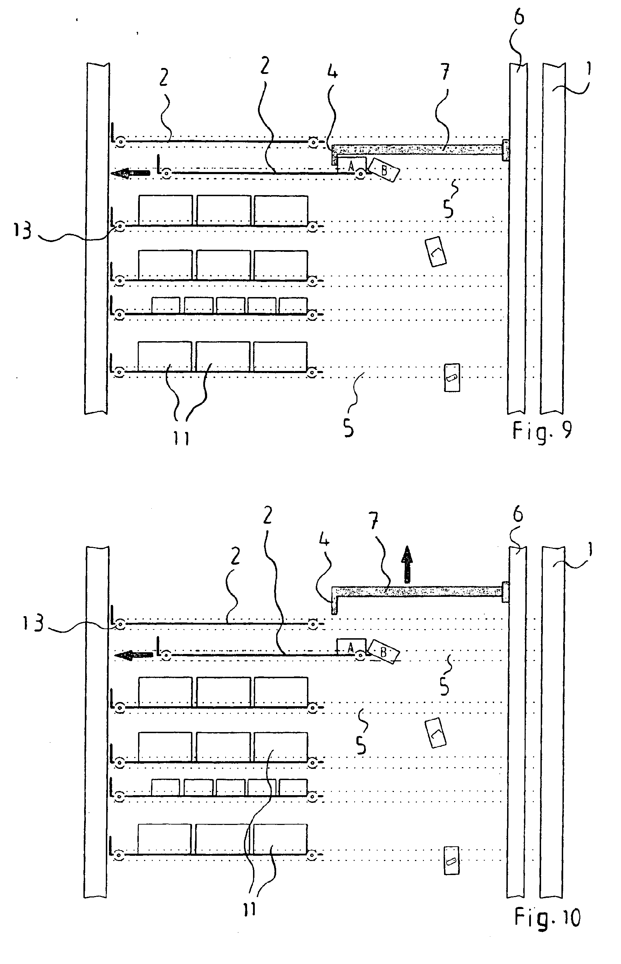

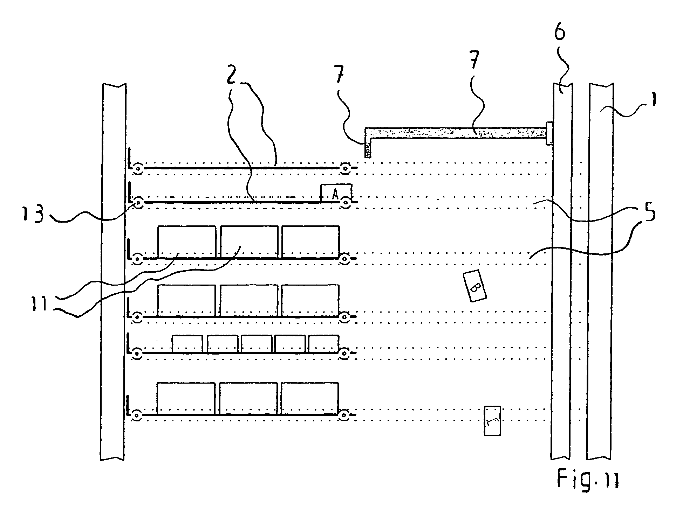

Dans l'exemple représenté aux différentes figures 1 à 11, les moyens de rétention 7 sont montés en translation verticale relativement à un portique 6 pour assurer la mobilité 8.

Le portique 6 a lui-même une mobilité de translation horizontale de sorte à assurer la mobilité 9.

Bien entendu, l'ensemble de ces mobilités est géré par un système de commande par exemple piloté par des moyens informatiques.

Plusieurs moyens de rétention 7 peuvent être envisagés selon l'invention.

Notamment, comme représenté sur les figures 1 à 11, les moyens de rétention 7 peuvent être constitués d'une butée 4 formée par l'extrémité d'un bras.

La butée 4 est avantageusement configurée pour s'appliquer sur la face arrière d'un des objets 11 de la ligne relativement au déplacement du tiroir 2 d'une position active à une position de repos.

Selon une autre possibilité, une tête d'extraction est munie de moyens d'arrimage configurés pour être positionnés au-dessus d'un des objets 11 de la ligne.

Les moyens d'arrimage pourront être une bouche d'aspiration dans laquelle une dépression assure un effet ventouse sur la surface d'un objet de la ligne.

A titre avantageux la bouche d'aspiration de la tête d'extraction 7 est située directement à la sortie d'un générateur de dépression porté directement par le portique 6 évitant ainsi des passages de tuyaux d'air sur l'ensemble de l'installation. Cette disposition peut par ailleurs être combinée avec un autre mécanisme de sélection et de déplacement de tiroirs.

Tout autre moyen d'arrimage est envisageable notamment une préhension par pince.

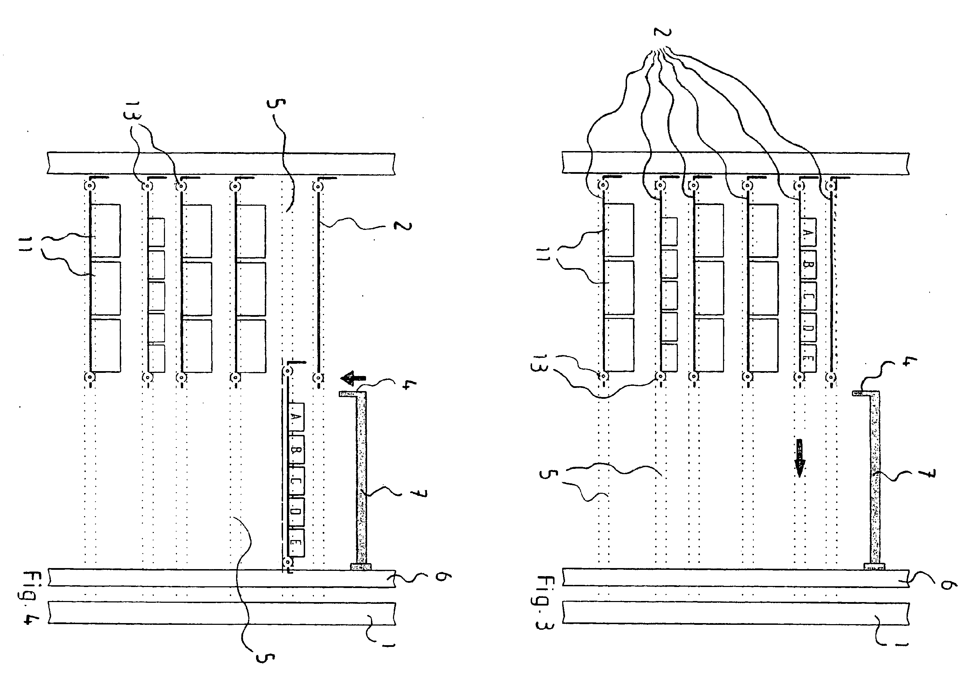

On décrit ci-après un exemple d'enchaînement des étapes de fonctionnement de l'installation de l'invention selon un mode de réalisation préféré et en référence aux figures 3 à 11.

L'opérateur, par le biais d'une interface informatique, demande la délivrance de quatre objets B C D E spécifiques et identiques, par exemple une référence de boîte de médicaments.

Ces objets 11 sont identifiés dans une base de données et leur localisation est connue (identification du tiroir 2 stockant les objets et de la glissière 3 correspondante).

En conséquence, l'organe de couplage de la rampe mobile correspondant au tiroir 2 à déplacer est activé.

L'activation de l'organe de couplage entraîne le couplage du tiroir 2 et de la rampe mobile.

S'ensuit alors un déplacement de translation horizontale de la rampe mobile destiné à déplacer le tiroir 2 d'une position de repos illustrée en figure 3 vers une position active illustrée en figure 4.

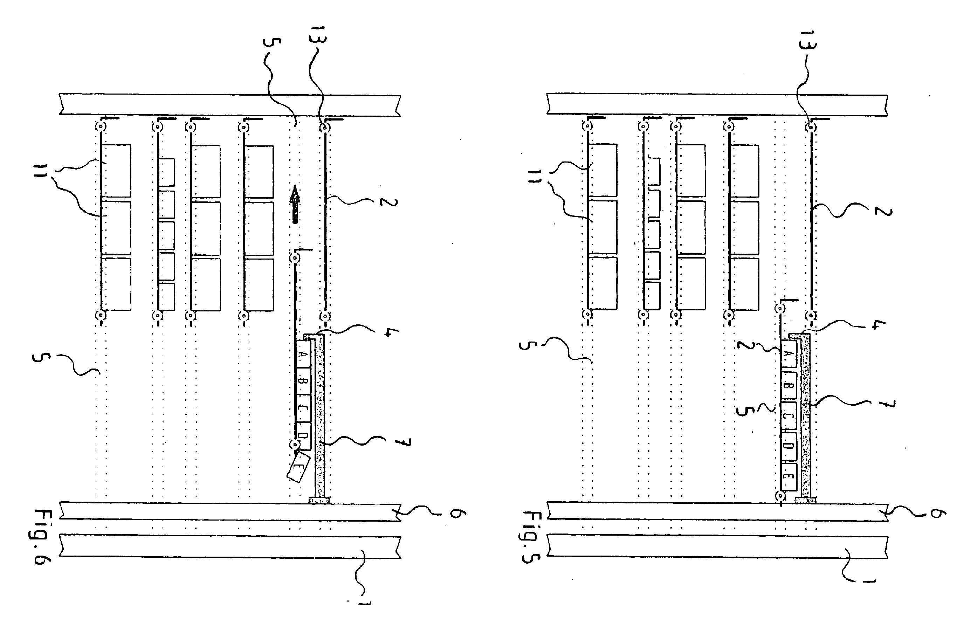

Le mouvement d'avance du tiroir 2 est ajusté de sorte que les moyens de rétention 7 sont amenés immédiatement derrière le dernier objet (A) 11 de la ligne (il pourrait s'agir d'un autre objet de la ligne) comme c'est le cas en figure 5.

Bien entendu, durant le déplacement du tiroir 2, les moyens de rétention 7 sont mis en une position de repli pour éviter toute interférence avec le déplacement du tiroir 2.

La butée 4 des moyens de rétention 7 est appliquée contre la face arrière du dernier objet (A) 11 de la ligne.

Selon l'autre possibilité, l'activation de la bouche d'aspiration permet alors, par effet ventouse, de retenir l'objet (A) 11.

On peut ensuite reculer le tiroir 2 par mouvement inverse de la rampe mobile.

Les objets 11 de la ligne sont retenus par les moyens de rétention 7 et tombent alors à l'extrémité 10 du tiroir par gravité sur le tapis de convoyage 12.

Dans ce cas le tiroir recule d'une position active à une position de repos de manière à ne délivrer que le nombre demandé d'objets 11. Selon un autre mode de réalisation, les moyens de rétention 7 sont positionnés au niveau du dernier objet 11 à délivrer. Dans ce cas, il est utile de prévoir un espace entre les objets 11 pour faciliter le positionnement de la butée 4 sur la face arrière du dernier objet 11 à délivrer. L'utilisation d'une tête d'extraction est avantageuse puisque celle-ci est positionnée au-dessus d'un objet 11 directement en arrière des objets 11 à délivrer. Ainsi, cet objet est bloqué et seuls les objets 11 retenus par rapport au déplacement du tiroir seront délivrés.

Les objets 11 tombés du tiroir 2 sont ensuite amenés jusqu'à la zone souhaitée par tous moyens courants.

On comprend aisément que l'installation ci-dessus assure une grande simplicité de fonctionnement cinématique dans la mesure où peu de mouvements sont nécessaires aux opérations de délivrance de plusieurs objets.

On peut noter que, selon un autre mode de réalisation, les tiroirs 2 peuvent être composés de glissières 3 aptes à recevoir les objets 11 en ligne, ainsi que d'alvéoles aptes à recevoir les objets 11 individuellement. Selon cette possibilité les moyens de rétention 7 sont avantageusement une tête d'extraction telle qu'une bouche d'aspiration ou une pince. Ainsi, cette disposition permet aux moyens de rétention 7 de retenir un ou des objets 11 en ligne pour délivrer en un seul temps une pluralité d'objets 11 ou d'arrimer un objet 11 pour la délivrance d'un objet 11 unique.

Les tiroirs 2 sont avantageusement fabriqués pour limiter les frottements avec les objets 11, pour faciliter leur délivrance par glissement.

Il est possible d'envisager que l'extrémité avant 10 des glissières 3 comporte un butoir escamotable qui peut être escamoté lorsque les objets 11 doivent être délivrés. Dans une autre possibilité l'extrémité avant 10 des glissières 3 ne comporte aucun butoir.

Selon un mode de réalisation, les glissières 3 peuvent avoir une inclinaison vers l'arrière du tiroir 2. Cette disposition est destinée à faciliter le remplissage des glissières 3 par les objets 11.

Selon une autre possibilité, l'inclinaison des glissières 3 est vers l'avant 10. Cette disposition peut être envisagée en combinaison avec un butoir escamotable. Ainsi, la délivrance est facilitée.

Dans l'intérêt de stocker plus de références d'objets 11 par tiroir 2, il peut être prévu que les glissières 3 des tiroirs 2 comportent un orifice. L'orifice est configuré pour permettre la chute d'objets 11. Ainsi, l'orifice est positionné, par exemple, sensiblement au milieu de la longueur de la glissière. Des objets 11 sont stockés en arrière de l'orifice et d'autres sont stockés en avant de l'orifice. Les objets 11 stockés en arrière de l'orifice seront délivrés selon l'invention mais chuterons sur le tapis de convoyage 12 au niveau de l'orifice. Les objets 11 stockés en avant de l'orifice seront délivrés selon l'invention et chuterons sur le tapis de convoyage 12 au niveau de l'extrémité avant 10 de la glissière 3.

### REFERENCES

- 1.: Châssis
- 2.: Tiroir
- 3.: Glissières
- 4.: Butée
- 5.: Rail de guidage
- 6.: Portique
- 7.: Moyens de rétention
- 8.: Mobilité verticale
- 9.: Mobilité latérale
- 10.: Extrémité avant glissière
- 11.: Objets
- 12.: Tapis de convoyage
- 13.: Roue

## Revendications

1. Installation de délivrance d'objets (11) comportant une rangée de tiroirs (2) de stockage d'objets en ligne (11), chaque tiroir comportant une surface de support d'objets (11), et des moyens d'entraînement aptes à déplacer un tiroir (2) sélectionné entre une position de repos et une position active dans laquelle les objets (11) stockés dans le tiroir (2) sélectionné sont accessibles pour la délivrance,
**caractérisée par le fait**
**qu'**elle comporte des moyens de rétention (7) configurés pour retenir un ou des objets de la ligne (11) présents sur le tiroir lorsque le tiroir (2) passe d'une position active à une position de repos, de sorte que, lorsque le tiroir (2) passe de la position active à la position de repos, les objets ne suivent pas le déplacement dudit tiroir (2) tout en restan en appui sur la surface de support dudit tiroir (2) et chutent par gravité dudit tiroir lorsqu'ils arrivent à un niveau où la surface de support dudit tiroir(2) est absente.

2. Installation selon la revendication 1 dans laquelle les moyens de rétention (7) sont mobiles verticalement et dans le plan des tiroirs (2) et à un degré de liberté en translation dans le plan des tiroirs (2) complémentaire à la mobilité des tiroirs (2).

3. Installation selon la revendication 1 ou 2 dans laquelle les moyens de rétention (7) sont constitués d'une tête d'extraction configurée pour être positionnée au-dessus d'un des objets (11) de la ligne et comporte des moyens d'arrimage audit objet.

4. Installation selon la revendication 3 dans laquelle les moyens d'arrimage sont constitués d'une bouche d'aspiration ayant un effet ventouse sur l'objet (11).

5. Installation selon la revendication 1 ou 2 dans laquelle les moyens de rétention (7) comportent une butée (4) configurée pour s'appliquer sur la face arrière d'un des objets (11) de la ligne relativement au déplacement du tiroir (2) de la position active à la position de repos.

6. Installation selon la revendication 5 dans laquelle la butée (4) est formée par l'extrémité distale d'un bras configuré pour se positionner verticalement derrière un des objets (11) de la ligne relativement au déplacement du tiroir (2) de la position active à la position de repos.

7. Installation selon l'une quelconque des revendications précédentes dans laquelle les tiroirs (2) comportent une pluralité de glissières (3) disposées dans le sens de déplacement des tiroirs (2) et destinés à recevoir les objets (11) disposés en ligne.

8. Installation selon la revendication 7 dans laquelle les glissières (3) sont de largeurs différentes ou réglables.

9. Procédé de délivrance d'objet utilisant une installation de délivrance d'objet (11) selon l'une quelconque des revendications 1 à 8 comprenant les étapes de :
- déplacement d'un tiroir (2) d'une position de repos à une position active
- positionnement des moyens de rétention (7) au niveau d'un objet (11)
- déplacement dudit tiroir (2) d'une position active à une position de repos pendant lequel le ou les objet(s) retenus par les moyens de rétention (7) sont délivrés à l'extrémité (10) du tiroir (2).

## Claims

1. An object (11) delivering system including a row of drawers (2) for storing objects (11) in line, with each drawer including an object (11) support surface, and driving means able to move a selected drawer (2) between a rest position and an active position wherein the objects (11) stored in the selected drawer (2) are accessible for delivery,
**characterized in that**
it includes holding means (7) configured for holding one or several object(s) of the line (11) placed in the drawer, when the drawer (2) moves from an active position to a rest position, so that, when the drawer (2) moves from the active position to the rest position, the objects do not follow the motion of said drawer (2) but remain bearing on the support surface of said drawer (2) and fall, by gravity, from said drawer when they come to a level where the support surface of said drawer (2) is no longer existing.

2. A system according to claim 1, wherein the holding means (7) are mobile vertically and along the drawers (2) plane and with a degree of freedom in translation in the drawers (2) plane added to the drawers (2) mobility.

3. A system according to claim 1 or 2, wherein the holding means (7) are composed of an extraction head so configured as to be positioned above one of the objects (11) in the line and includes anchoring means linked with said object.

4. A system according to claim 3, wherein the anchoring means are composed of a sucking port having a suction-grip effect on the object (11).

5. A system according to claim 1 or 2, wherein the holding means (7) include a stop (4) so configured as to be applied onto the rear face of one of the object(s) (11) in the line with respect to the motion of the drawer (2) from the active position to the rest position.

6. A system according to claim 5, wherein the stop (4) is formed by the distal end of an arm so configured as to be vertically positioned behind one of the objects (11) in the line, with respect to the motion of the drawer (2) from the active position to the rest position.

7. A system according to any one of the preceding claims, wherein the drawers (2) include a plurality of runners (3) positioned along the drawers (2) moving direction and intended to receive the objects (11) positioned in line.

8. A system according to claim 7, wherein the runners (3) have a different or an adjustable width.

9. A method for delivering objects using an object delivering system (11) according to any one of claims 1 to 8, including the following steps:
- moving a drawer (2) from a rest position to an active position
- positioning the holding means (7) close to an object (11)
- moving said drawer (2) from an active position to a rest position in which the object(s) held by the holding means (7) is/are delivered at the end (10) of the drawer (2).

## Patentansprüche

1. Anlage für die Ausgabe von Objekten (11) mit einer Reihe Lagerschubladen (2) von in einer Reihe angeordneten Objekten (11), wobei jede Schublade eine Tragfläche für die Objekte (11) umfasst, sowie Antriebsmittel, die eine ausgewählte Schublade (2) verschieben können zwischen einer Ruheposition und einer aktiven Position, in der die in der ausgewählten Schublade (2) gelagerten Objekte (11) für die Ausgabe zugänglich sind, **dadurch gekennzeichnet, dass** sie Rückhaltmittel (7) umfasst, die konfiguriert sind, um ein oder mehrere Objekte (11) der Reihe in der Schublade zurückzuhalten, wenn die Schublade (2) von einer aktiven Position in eine Ruheposition übergeht, so dass die Objekte, wenn die Schublade (2) von der aktiven Position in die Ruheposition übergeht, nicht der Bewegung der genannten Schublade (2) folgen, sondern gegen die Tragfläche der genannten Schublade (2) abgestützt bleiben und durch die Schwerkraft der genannten Schublade herunterfallen, wenn sie eine bestimmte Höhe erreichen, in der die Tragfläche der genannten Schublade abwesend ist.

2. Anlage gemäß Anspruch 1, bei der die Rückhaltmittel (7) in vertikaler Richtung und auf der Ebene der Schublade (2) mobil sind und mit einem Translationsfreiheitsgrad auf der Ebene der Schublade (2), der die Mobilität der Schubladen (2) ergänzt.

3. Anlage gemäß Anspruch 1 oder 2, bei der die Rückhaltmittel (7) aus einem Entnahmekopf bestehen, der konfiguriert ist, um über eins der Objekte (11) der Reihe positioniert zu werden, und der Befestigungsmittel am genannten Objekt aufweist.

4. Anlage gemäß Anspruch 3, bei der die Befestigungsmittel aus einer Ansaugöffnung bestehen, die eine Saugnapfwirkung auf das Objekt (11) haben.

5. Anlage gemäß Anspruch 1 oder 2, bei der die Rückhaltmittel (7) einen Anschlag (4) umfassen, der konfiguriert ist, um sich an die Rückseite eins der Objekte (11) der Reihe anzulegen, in Bezug auf die Verschiebung der Schublade (2) aus der aktiven Position in die Ruheposition.

6. Anlage gemäß Anspruch 5, bei der der Anschlag (4) vom distalen Ende eines Arms gebildet wird, der konfiguriert ist, um sich vertikal hinter eins der Objekte (11) der Reihe zu positionieren, in Bezug auf die Verschiebung der Schublade (2) aus der aktiven Position in die Ruheposition.

7. Anlage gemäß einem der vorangehenden Ansprüche, bei der die Schubladen (2) eine Vielzahl von Gleitschienen (3) aufweisen, die in Verschieberichtung der Schubladen (2) angeordnet und dazu bestimmt sind, die in Reihe angeordneten Objekte (11) aufzunehmen.

8. Anlage gemäß Anspruch 7, bei der die Gleitschienen (3) verschiedene Breiten aufweisen oder einstellbar sind.

9. Verfahren für die Abgabe von Objekten anhand einer Anlage für die Abgabe von Objekten (11) gemäß einem der Ansprüche 1 bis 8, mit folgenden Schritten:
- Verschiebung einer Schublade (2) aus einer Ruhestellung in eine aktive Stellung,
- Positionierung der Rückhaltmittel (7) in Höhe eines Objekts (11),
- Verschiebung der genannten Schublade (2) aus einer aktiven Position in eine Ruheposition, bei der das oder die von den Rückhaltmittel (7) zurückgehaltene(n) Objekt(e) am Ende (10) der Schublade (2) abgegeben wird/werden.
